# EUROPEAN PATENT APPLICATION

(11) **EP 4 589 127 A1**
(43) Date of publication of application: **23.07.2025**
(21) Application number: 23894280.9
(22) Date of filing: 10.10.2023
(51) Int. Cl.: F02B 19/12, F02B 19/16, F02B 23/08, F02M 21/02

(54) **DIVIDED-CHAMBER GAS ENGINE**

(30) Priority: 22.11.2022 JP 2022186118
(71) Applicant: MITSUBISHI HEAVY INDUSTRIES ENGINE & TURBOCHARGER, LTD., Sagamihara-shi, Kanagawa 252-5293 (JP)
(72) Inventor: FURUKAWA, Yuta, Sagamihara-shi, Kanagawa 252-5293 (JP); TAKEHARA, Naoto, Sagamihara-shi, Kanagawa 252-5293 (JP)
(74) Representative: Studio Torta S.p.A.
(86) International application number: PCT/JP2023/036717
(87) International publication number: WO 2024/111268

(57) **Abstract**

Provided is a divided-chamber gas engine having a main combustion chamber and a sub-chamber communicating with the main combustion chamber via a plurality of nozzle holes, the divided-chamber gas engine comprising a main combustion chamber formation part that forms the main combustion chamber, a sub-chamber formation part that forms the sub-chamber, an intake line for guiding a mixture containing gas fuel and air to the main combustion chamber, a spark plug that is disposed in the sub-chamber and is configured to ignite unburned fuel, and an air-fuel mixture introduction line that branches from the intake line and guides the air-fuel mixture flowing through the intake line as at least a portion of unburned fuel to the sub-chamber.

## Description

### Technical Field

The present disclosure relates to a prechamber gas engine.

The present application claims priority based on Japanese Patent Application No. 2022-186118 filed in Japan on November 22, 2022, the contents of which are incorporated herein by reference.

### Background Art

In the related art, a prechamber gas engine including a main combustion chamber defined between a piston and a cylinder head, and a prechamber (sub-combustion chamber) communicating with the main combustion chamber through a plurality of ejection holes is known (for example, PTL 1). In the prechamber gas engine, a spark plug disposed in the prechamber ignites the mixture gas in the prechamber, and the combustion flame generated by the ignition is ejected from each of the plurality of ejection holes, so that the lean pre-mixed gas in the main combustion chamber is combusted.

### Citation List

### Patent Literature

[PTL 1] Japanese Unexamined Patent Application Publication No. 2016-142222

### Summary of Invention

### Technical Problem

The prechamber gas engine has an active prechamber that supplies a fuel gas to the prechamber to increase the combustible concentration of the mixture gas around the spark plug. In the active prechamber, unless the fuel gas is boosted to a pressure level similar to the boost pressure of the mixture gas, the fuel gas cannot be supplied to the inside of the prechamber. For this reason, the active prechamber requires a dedicated compressor for boosting the fuel gas, which causes a problem of complicating the structure of the prechamber gas engine.

The prechamber gas engine has a passive prechamber in which no fuel is supplied to the prechamber. The passive prechamber is affected by the exhaust gas remaining in the main combustion chamber or the prechamber in the previous cycle. Although the combustible concentration of the mixture gas around the spark plug can be increased by devising the shape of the ejection hole or the shape of the prechamber in the passive prechamber, there is a problem in that there are significant restrictions on the shape of the ejection hole or the shape of the prechamber.

In view of the above circumstances, an object of at least one embodiment of the present disclosure is to provide a prechamber gas engine in which it is possible to increase a combustible concentration of a mixture gas in the vicinity of a spark plug in a prechamber while suppressing a complication of a structure.

### Solution to Problem

A prechamber gas engine according to at least one embodiment of the present disclosure includes a main combustion chamber and a prechamber communicating with the main combustion chamber through a plurality of ejection holes, and the engine includes:
a main combustion chamber forming portion that forms the main combustion chamber;
a prechamber forming portion that forms the prechamber;
an intake line for guiding a mixture gas containing a fuel gas and air to the main combustion chamber;
a spark plug that is disposed in the prechamber and is configured to ignite an unburned fuel; and
a mixture gas introduction line for guiding the mixture gas flowing through the intake line to the prechamber as at least some of the unburned fuel, the mixture gas introduction line branching from the intake line.

### Advantageous Effects of Invention

According to at least one embodiment of the present disclosure, there is provided a prechamber gas engine in which it is possible to increase a combustible concentration of a mixture gas in the vicinity of a spark plug in a prechamber while suppressing the complication of a structure.

### Brief Description of Drawings

Fig. 1 is a view schematically showing a prechamber gas engine according to an embodiment of the present disclosure.
Fig. 2 is a schematic cross-sectional view of a prechamber forming portion of a prechamber gas engine according to an embodiment of the present disclosure.
Fig. 3 is a schematic cross-sectional view of a prechamber forming portion of a prechamber gas engine according to an embodiment of the present disclosure.
Fig. 4 is a schematic view of a prechamber of a prechamber gas engine according to an embodiment of the present disclosure as viewed from a main combustion chamber side in an extending direction of a central axis of the prechamber.
Fig. 5 is a schematic cross-sectional view of a prechamber forming portion of a prechamber gas engine according to an embodiment of the present disclosure.
Fig. 6 is a view schematically showing a prechamber gas engine according to an embodiment of the present disclosure.

### Description of Embodiments

Hereinafter, some embodiments of the present disclosure will be described with reference to the accompanying drawings. However, dimensions, materials, shapes, and relative dispositions of components described as the embodiments or illustrated in the drawings are not intended to limit the scope of the present disclosure, and are merely examples for describing the present disclosure.

### (Prechamber gas engine)

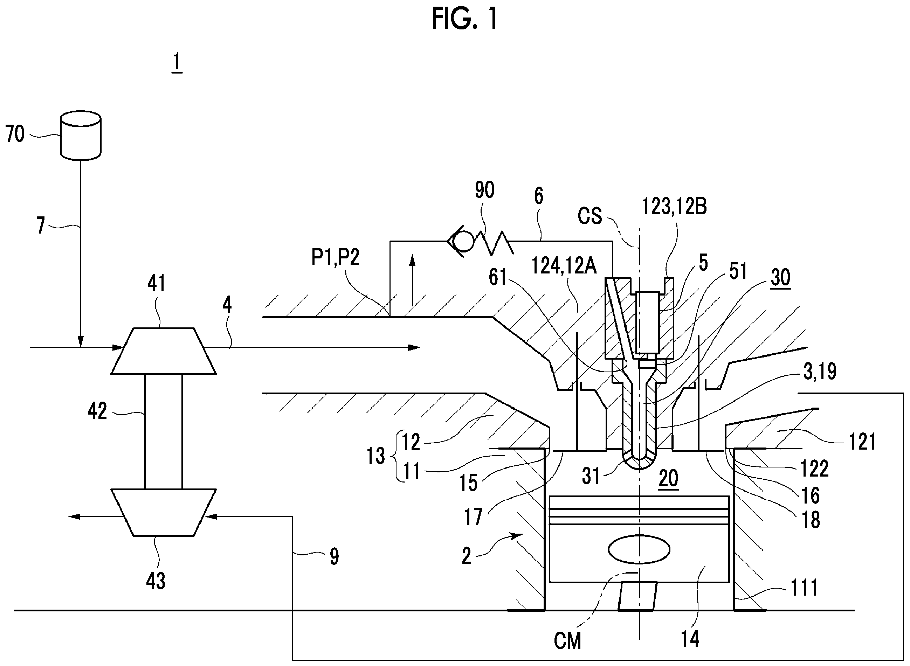

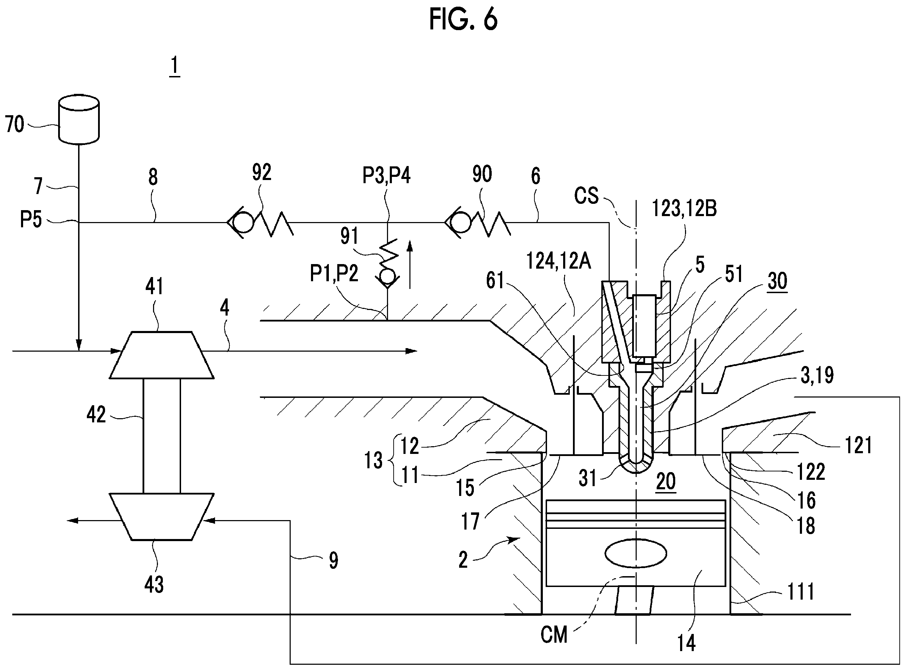

Figs. 1 and 6 are views each schematically showing a prechamber gas engine 1 according to an embodiment of the present disclosure. As shown in Figs. 1 and 6, the prechamber gas engine 1 according to some embodiments includes a main combustion chamber 20 of the engine 1 and a prechamber (sub-combustion chamber) 30 communicating with the main combustion chamber 20 through a plurality of ejection holes 31. The prechamber gas engine 1 of the present disclosure can be used for automobiles, ships, or industries (for example, land-based power generation).

As shown in Figs. 1 and 6, the prechamber gas engine 1 includes a main combustion chamber forming portion 2 that forms a main combustion chamber 20, a prechamber forming portion 3 that forms a prechamber 30, an intake line 4 for guiding a mixture gas containing a fuel gas and air to the main combustion chamber 20, a spark plug 5 that is disposed in the prechamber 30 and is configured to ignite an unburned fuel, a mixture gas introduction line 6 for guiding the mixture gas flowing through the intake line 4 to the prechamber 30 as at least some of the unburned fuel, the mixture gas introduction line 6 branching from the intake line 4.

As shown in Figs. 1 and 6, the prechamber gas engine 1 includes a cylinder 13 that is composed of a cylinder block 11 in which a cylinder bore (cylindrical hole) 111 extending along a central axis CM of the main combustion chamber 20 is formed and a cylinder head member 12 having a closing portion 121 that closes an opening end of the cylinder bore 111, a piston 14 that is accommodated in the cylinder bore 111 and is capable of reciprocating along the extending direction of an axis (central axis CM of the main combustion chamber 20) of the cylinder bore 111, and a prechamber nozzle 19.

### (Main Combustion Chamber)

The main combustion chamber 20 described above is defined by the inner peripheral surface of the cylinder bore 111, the top surface of the piston 14, and a bore side surface 122 facing the top surface of the piston 14 of the closing portion 121 with a gap interposed therebetween. The closing portion 121 and the bore side surface 122 of the closing portion 121 extend in the orthogonal direction with respect to the central axis CM of the main combustion chamber 20. The main combustion chamber forming portion 2 includes a portion of the cylinder block 11 in which the cylinder bore 111 is formed, the closing portion 121 of the cylinder head member 12, and the piston 14.

### (Cylinder Head Member)

The cylinder head member 12 has the closing portion 121 described above and a spark plug support portion 123 that supports the spark plug 5. In the illustrated embodiment, the cylinder head member 12 includes a cylinder head 12A having the closing portion 121 and a prechamber plug holder 12B having the spark plug support portion 123. The cylinder head 12A is configured separately from the prechamber plug holder 12B, and has a plug holder support portion 124 that supports the prechamber plug holder 12B. The prechamber plug holder 12B is supported by the plug holder support portion 124 and is mounted to the cylinder head 12A. In some other embodiments, the cylinder head member 12 may be configured integrally with the cylinder head 12A and the prechamber plug holder 12B.

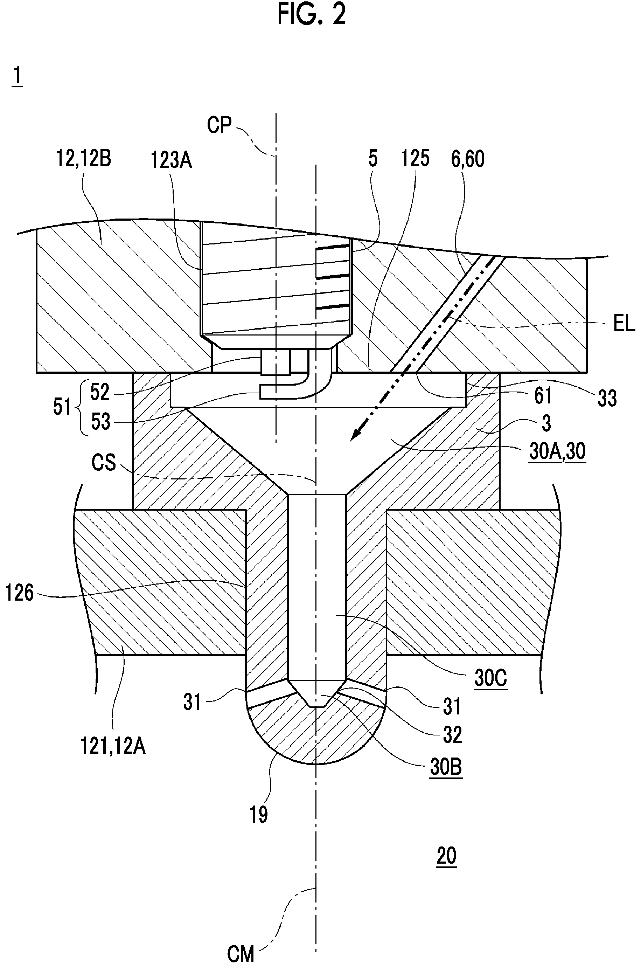

Figs. 2, 3, and 5 are schematic cross-sectional views of the prechamber forming portion 3 of the prechamber gas engine 1 according to the embodiment of the present disclosure, respectively. In Figs. 2, 3, and 5, a cross section including the central axis CS along the central axis CS of the prechamber 30 of the prechamber forming portion 3 is shown. The prechamber plug holder 12B is disposed on a side (upper side in Fig. 1) opposite to the main combustion chamber 20 with respect to the closing portion 121, and the prechamber nozzle 19 is interposed between the closing portion 121 and the prechamber plug holder 12B. The prechamber plug holder 12B has a plug hole 123A extending along an axis CP of the spark plug 5. The spark plug 5 is accommodated inside the plug hole 123A. The spark plug 5 is fixedly supported to the prechamber plug holder 12B by screwing a screw portion formed on the outer surface of the spark plug 5 and a screw portion formed on the inner surface of the plug hole 123A. The spark plug support portion 123 includes the plug hole 123A in which a screw portion is formed on an inner surface thereof.

### (Spark plug)

As shown in Figs. 1 to 3, 5, and 6, the spark plug 5 is a spark plug that includes an ignition unit 51 (spark discharge unit) provided on one side (main combustion chamber 20 side) in the extending direction of the axis CP of the spark plug 5, and ignites the mixture gas by causing spark discharge in the ignition unit 51.

As shown in Figs. 2, 3, and 5, the ignition unit 51 includes a center electrode 52, and a ground electrode 53 that is disposed to be non-contact with the center electrode 52 and that forms a spark discharge gap for generating a spark between the center electrode 52 and the ground electrode 53. The ignition unit 51 is disposed in the prechamber 30. In the illustrated embodiment, the ignition unit 51 is disposed on the main combustion chamber 20 side (lower side in the drawing) with respect to the end surface of the end portion 125 on the main combustion chamber 20 side of the prechamber plug holder 12B.

### (Prechamber Nozzle)

The prechamber nozzle 19 is formed in a bottomed tubular shape in which an end portion on the main combustion chamber 20 side is closed, and an end portion on a side separated from the main combustion chamber 20 is connected in series in a state of abutting against the end portion of the prechamber plug holder 12B on the main combustion chamber 20 side. The prechamber nozzle 19 is inserted into the through-hole 126 formed in the closing portion 121 and extending along the central axis CM. The end portion 125 on the main combustion chamber 20 of the prechamber nozzle 19 side faces the main combustion chamber 20.

### (Prechamber)

As shown in Figs. 2, 3, and 5, the prechamber 30 is defined by an inner surface of the prechamber nozzle 19 and an end surface of the end portion 125 on the main combustion chamber 20 side of the prechamber plug holder 12B. The above-described prechamber forming portion 3 includes the prechamber nozzle 19 and the end portion 125 on the main combustion chamber 20 side of the prechamber plug holder 12B. A plurality of ejection holes 31, which allow the prechamber 30 formed in the ejection holes 31 and the outside thereof to communicate with each other, are formed at the end portion on the main combustion chamber 20 side of the prechamber nozzle 19. The main combustion chamber 20 and the prechamber 30 communicate with each other through the plurality of ejection holes 31.

As shown in Figs. 1 and 6, an intake hole 15 and an exhaust hole 16 that each communicate with the main combustion chamber 20 are formed around the prechamber nozzle 19 in the closing portion 121. The prechamber gas engine 1 further includes an intake valve 17 capable of opening and closing the intake hole 15 and an exhaust valve 18 capable of opening and closing the exhaust hole 16. Hereinafter, a case will be described in which the prechamber gas engine 1 is a four-stroke engine including a gas supply step of guiding a mixture gas (air including combustion gas) into the main combustion chamber 20, a compression step of compressing the mixture gas in the main combustion chamber 20, a combustion step of combusting the mixture gas ignited by the spark plug 5, and an exhaust step of discharging an exhaust gas from the main combustion chamber 20. However, the prechamber gas engine 1 of the present disclosure can also be applied to a two-stroke engine.

### (Intake Line)

The intake line 4 has a flow path through which a mixture gas containing a fuel gas and air flows. The intake hole 15 described above is formed at a downstream end of the intake line 4. In the illustrated embodiment, the prechamber gas engine 1 further includes a compressor 41 that is provided in the intake line 4 and is configured to compress the mixture gas flowing through the intake line 4, and a fuel gas supply line 7 for supplying a fuel gas, the fuel gas supply line 7 connected to an upstream side of the compressor 41 of the intake line 4.

By driving the compressor 41, air is sucked from the upstream side of the connecting portion between the intake line 4 and the fuel gas supply line 7. The upstream end of the intake line 4 may be opened, or may be connected to a supply source (for example, a gas tank that stores rich oxygen gas) of a gas (rich oxygen gas) having an oxygen concentration higher than that of air in the atmosphere. An upstream end of the fuel gas supply line 7 is connected to a supply source (for example, a fuel gas tank that stores the fuel gas) 70 of the fuel gas. The fuel gas flowing through the fuel gas supply line 7 has a higher pressure than the mixture gas flowing on the upstream side of the compressor 41 of the intake line 4. The fuel gas flowing into the intake line 4 through the fuel gas supply line 7 is mixed with the air flowing through the intake line 4, so that a mixture gas is formed.

In the illustrated embodiment, the prechamber gas engine 1 further includes an exhaust line 9 for discharging the exhaust gas from the main combustion chamber 20, a turbine 43 that is provided in the exhaust line 9 and is configured to be driven by the energy of the exhaust gas flowing through the exhaust line 9, and a rotary shaft 42 that connects the compressor 41 and the turbine 43. The prechamber gas engine 1 includes a supercharger (turbocharger) including the compressor 41, the rotary shaft 42, and the turbine 43. The compressor 41 is connected to one end side of the rotary shaft 42, and the turbine 43 is connected to the other end side of the rotary shaft 42. The compressor 41 is coaxially connected to the turbine 43 via the rotary shaft 42, and thus rotates in conjunction with the rotation of the turbine 43 together with the rotary shaft 42. The compressor 41 is configured to be driven by the energy of the exhaust gas discharged from the main combustion chamber 20 and to compress the mixture gas flowing through the intake line 4.

### (Mixture gas Introduction Line)

An upstream end of the mixture gas introduction line 6 is connected to a downstream side of a connecting portion in the intake line 4 with the fuel gas supply line 7. A mixture gas introduction inlet 61 that communicates with the prechamber 30 is formed at a downstream end of the mixture gas introduction line 6. In the illustrated embodiment, the mixture gas introduction inlet 61 is formed on the end surface of the end portion 125 on the main combustion chamber 20 side of the prechamber plug holder 12B. As shown in the drawing, the prechamber gas engine 1 may further include a backflow prevention device (check valve in the illustrated example) 90 that is provided in the mixture gas introduction line 6 and prevents circulation of the gas from the mixture gas introduction inlet 61 toward the connecting portion P2 with the intake line 4.

In the gas supply step, the mixture gas introduced into the main combustion chamber 20 through the intake hole 15 is referred to as a main combustion chamber side mixture gas. In the gas supply step, the mixture gas introduced into the prechamber 30 through the mixture gas introduction line 6 is referred to as a prechamber side mixture gas. The main combustion chamber side mixture gas is mixed with the exhaust gas remaining in the main combustion chamber 20, so that the combustible concentration is lower than that of the prechamber side mixture gas. The prechamber side mixture gas is mixed with the gas in the prechamber 30, whereby the excessively-rich mixture gas is formed in the prechamber 30. The mixture gas in the prechamber 30 is ignited and combusted by spark discharge at the ignition unit 51 of the spark plug 5. Then, the ignition flame is ejected into the main combustion chamber 20 through the plurality of ejection holes 31, and the lean pre-mixed gas in the main combustion chamber 20 is combusted.

As shown in Figs. 1 and 6, the prechamber gas engine 1 according to some embodiments includes the above-described main combustion chamber forming portion 2 that forms the main combustion chamber 20, the above-described prechamber forming portion 3 that forms the prechamber 30, the intake line 4 described above, the spark plug 5 described above, and the mixture gas introduction line 6 described above.

According to the above-described configuration, in the prechamber gas engine 1, the mixture gas flowing through the intake line 4 can be guided to the prechamber 30 through the mixture gas introduction line 6, and the combustible concentration of the mixture gas in the vicinity of the spark plug 5 in the prechamber 30 can be increased. The above-described prechamber gas engine 1 does not require a dedicated compressor for boosting the fuel gas, which is transmitted to the prechamber 30, to a pressure level similar to the boost pressure, compared to the active prechamber. Therefore, it is possible to suppress the complication of the structure. In addition, in the prechamber gas engine 1, the influence of the residual exhaust gas in the previous cycle is smaller than that in the passive prechamber. Therefore, the degree of freedom in designing the shape of the plurality of ejection holes 31 or the shape of the prechamber 30 is increased.

In some embodiments, as shown in Figs. 1 and 6, the above-described prechamber gas engine 1 includes the compressor 41 that is provided in the intake line 4 and is configured to compress the mixture gas. The connecting portion P1 between the intake line 4 and the mixture gas introduction line 6 is provided on the downstream side of the compressor 41. According to the above-described configuration, the mixture gas boosted by the compressor 41 can be guided to the prechamber 30 through the mixture gas introduction line 6. In this case, even without a dedicated compressor, the supply pressure of the mixture gas guided to the prechamber 30 through the mixture gas introduction line 6 can be increased. Therefore, the mixture gas can be effectively supplied to the prechamber 30.

As shown in Figs. 2, 3, and 5, in the prechamber gas engine 1 according to some embodiments, each of the plurality of ejection holes 31 is formed at an end portion 32 on the main combustion chamber 20 side of the prechamber 30 in the extending direction of the central axis CS in the prechamber forming portion 3. The spark plug 5 is mounted on an end portion 33 on a side separated from the main combustion chamber 20 in the extending direction of the central axis CS of the prechamber 30 in the prechamber forming portion 3. The mixture gas introduction inlet 61 that communicates with the prechamber 30 formed in the mixture gas introduction line 6 is formed at the end portion 33 on the side separated from the main combustion chamber 20 of the prechamber 30 in the prechamber forming portion 3.

According to the above-described configuration, the spark plug 5 and the mixture gas introduction inlet 61 are located on the same side (side separated from the main combustion chamber 20) in the extending direction of the central axis CS of the prechamber 30. Therefore, the combustible concentration of the mixture gas in the vicinity of the spark plug 5 can be rapidly increased by the mixture gas introduced into the prechamber 30 from the mixture gas introduction inlet 61. In addition, the temperature of the spark plug can be reduced by the mixture gas introduced into the prechamber 30 from the mixture gas introduction inlet 61 during the gas supply step. Therefore, damage to the spark plug 5 due to heat can be suppressed.

As shown in Figs. 2, 3, and 5, in the prechamber gas engine 1 according to some embodiments includes the prechamber 30 described above, a first region 30A in which an ignition unit 51 of the spark plug 5 is disposed and the mixture gas introduction inlet 61 is formed, a second region 30B in which the plurality of ejection holes 31 are formed, and a third region 30C that is formed between the first region 30A and the second region 30B and of which an area orthogonal to the central axis CS of the prechamber 30 is smaller than that of the first region 30A.

The first region 30A is located on a side farther from the main combustion chamber 20 than the third region 30C, and the second region 30B is located on a side closer to the main combustion chamber 20 than the third region 30C. In the illustrated embodiment, the first region 30A is located on a side farther from the main combustion chamber 20 than a portion in which the prechamber nozzle 19 (prechamber forming portion 3) is inserted into the through-hole 126. The first region 30A includes at least a part of an area reduction portion, and in the area reduction portion, an area orthogonal to the central axis CS of the prechamber 30 decreases as the central axis CS is directed toward the main combustion chamber 20 side in the extending direction of the central axis CS of the prechamber 30. In addition, a main combustion chamber 20 side end, in which the area orthogonal to the central axis CS of the prechamber 30 is minimized, is connected to the third region 30C. As shown in the drawing, in the third region 30C, the area orthogonal to the central axis CS of the prechamber 30 may be constant from the connecting portion with the first region 30A to the connecting portion with the second region 30B.

According to the above-described configuration, in the prechamber 30, the area of the third region 30C orthogonal to the central axis CS of the prechamber 30 is smaller than that of the first region 30A. Therefore, the mixture gas guided from the mixture gas introduction inlet 61 to the first region 30A can be retained in the first region 30A where the ignition unit 51 of the spark plug 5 is present. In this manner, the combustible concentration of the mixture gas in the vicinity of the spark plug 5 can be effectively increased, and the cooling effect of the spark plug 5 by the mixture gas introduced into the prechamber 30 from the mixture gas introduction inlet 61 can be increased.

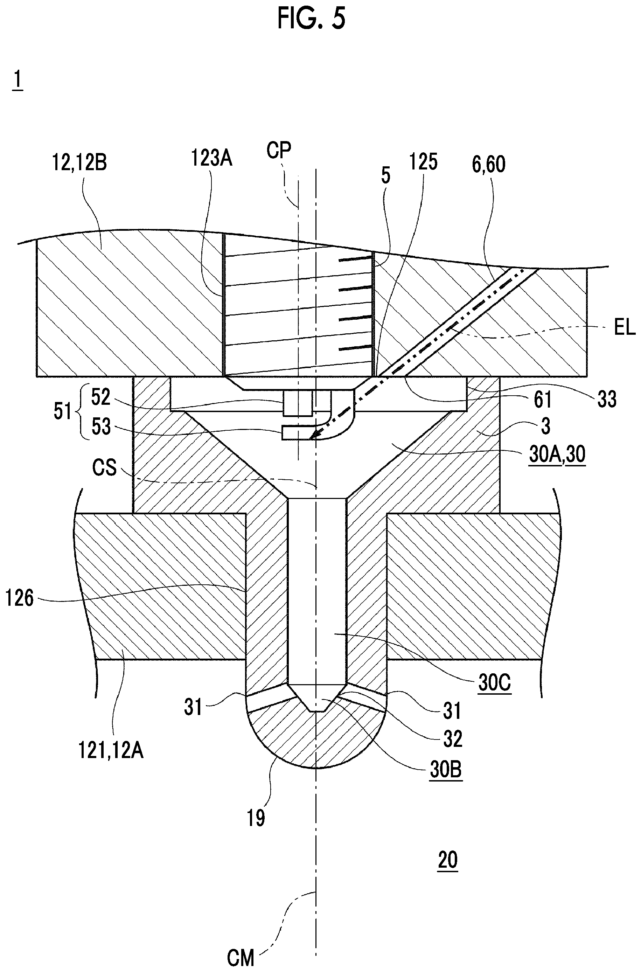

As shown in Figs. 2 and 5, in the prechamber gas engine 1 according to some embodiments, the axis CP of the spark plug 5 extends in the extending direction of the central axis CS of the prechamber 30 in a cross section along the central axis CS of the prechamber 30. In this case, the installation of the spark plug 5 is easier than in a case where the axis CP of the spark plug 5 is inclined with respect to the extending direction of the central axis CS of the prechamber 30.

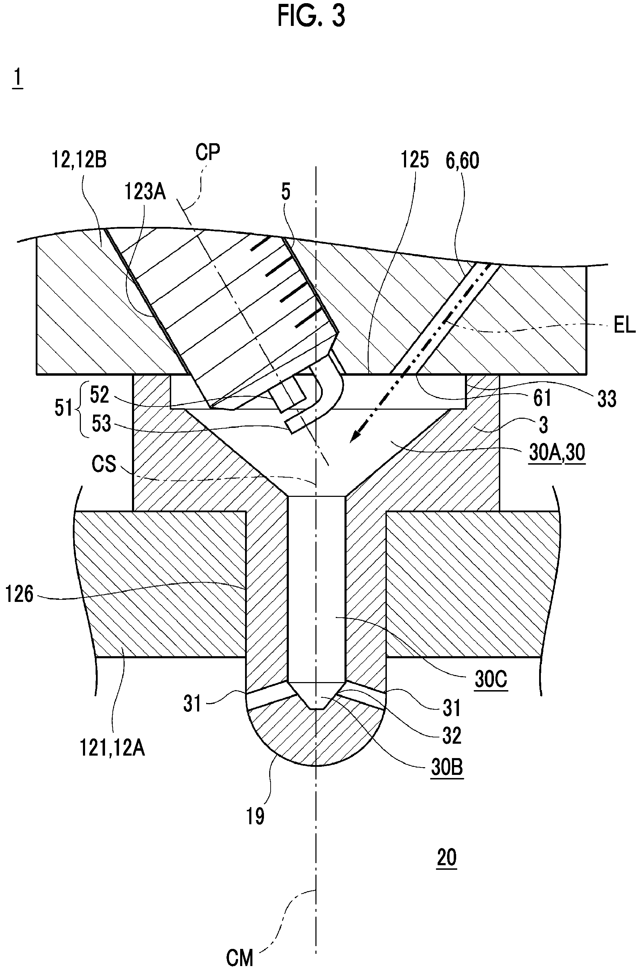

As shown in Fig. 3, in the prechamber gas engine 1 according to some embodiments, the spark plug 5 described above is inclined such that a distance from the central axis CS of the prechamber 30 decreases as the axis CP of the spark plug 5 is directed toward the main combustion chamber 20 side in a cross section along the central axis CS of the prechamber 30. In this case, it is easier to allow the mixture gas introduced into the prechamber 30 from the mixture gas introduction inlet 61 to flow toward the ignition unit 51 of the spark plug 5, compared to a case where the axis CP of the spark plug 5 extends in the extending direction of the central axis CS of the prechamber 30.

As shown in Figs. 2, 3, and 5, in the prechamber gas engine 1 according to some embodiments, in a cross section along the central axis CS of the prechamber 30, an inclined portion 60 which is at least a part including the mixture gas introduction inlet 61 of the mixture gas introduction line 6 described above is inclined such that a distance (shortest distance) from the axis CP of the spark plug 5 decreases as the inclined portion 60 is directed toward the mixture gas introduction inlet 61 side.

According to the above-described configuration, at least a part (inclined portion 60) including the mixture gas introduction inlet 61 of the mixture gas introduction line 6 is inclined toward the axis CP of the spark plug 5. In this manner, the mixture gas introduced into the prechamber 30 from the mixture gas introduction inlet 61 can be guided to the vicinity of the spark plug 5. In this manner, the combustible concentration of the mixture gas in the vicinity of the spark plug 5 can be effectively increased, and the cooling effect of the spark plug 5 by the mixture gas introduced into the prechamber 30 from the mixture gas introduction inlet 61 can be increased.

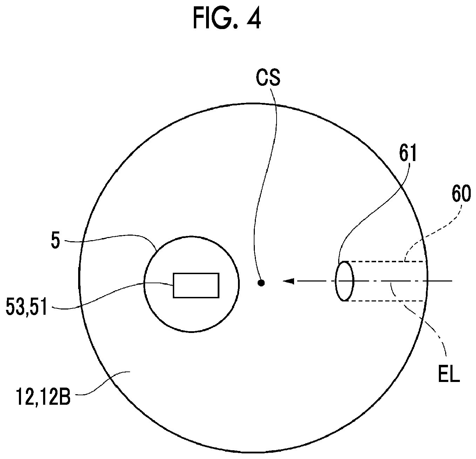

Fig. 4 is a schematic view of the prechamber 30 of the prechamber gas engine 1 according to the embodiment of the present disclosure as viewed from the main combustion chamber 20 side in the extending direction of the central axis CS of the prechamber 30. As shown in Fig. 4, in the prechamber gas engine 1 according to some embodiments, when viewed from one side in the extending direction of the central axis CS of the prechamber 30, at least a part (inclined portion 60) including the mixture gas introduction inlet 61 of the mixture gas introduction line 6 extends toward the ignition unit 51 of the spark plug 5.

In the illustrated embodiment, when viewed from one side in the extending direction of the central axis CS of the prechamber 30, the ignition unit 51 of the spark plug 5 is located on a virtual straight line EL passing through the center (center of the drawing) of the mixture gas introduction inlet 61. The virtual straight line EL may be a straight line orthogonal to a virtual plane including the mixture gas introduction inlet 61, or may be a straight line obtained by extending the axis of the inclined portion 60.

According to the above-described configuration, when viewed from one side in the extending direction of the central axis CS of the prechamber 30, at least a part including the mixture gas introduction inlet 61 of the mixture gas introduction line 6 extends toward the ignition unit 51 of the spark plug 5. In this manner, the mixture gas introduced into the prechamber 30 from the mixture gas introduction inlet 61 can be guided to the vicinity of the ignition unit 51. In this manner, the combustible concentration of the mixture gas in the vicinity of the ignition unit 51 can be effectively increased, and the cooling effect of the ignition unit 51 by the mixture gas introduced into the prechamber 30 from the mixture gas introduction inlet 61 can be increased.

As shown in Fig. 5, in the prechamber gas engine 1 according to some embodiments, in a cross section along the central axis CS of the prechamber 30, the ignition unit 51 of the spark plug 5 described above is located on the virtual straight line EL passing through the center (center of the drawing) of the mixture gas introduction inlet 61. The virtual straight line EL may be a straight line orthogonal to a virtual plane including the mixture gas introduction inlet 61, or may be a straight line obtained by extending the axis of the inclined portion 60.

According to the above-described configuration, the mixture gas introduced into the prechamber 30 from the mixture gas introduction inlet 61 can be guided to the ignition unit 51 of the spark plug 5. In this manner, the combustible concentration of the mixture gas in the vicinity of the ignition unit 51 can be effectively increased, and the cooling effect of the ignition unit 51 by the mixture gas introduced into the prechamber 30 from the mixture gas introduction inlet 61 can be increased.

### (Fuel gas Introduction Line)

As shown in Fig. 6, the prechamber gas engine 1 according to some embodiments further includes a fuel gas introduction line 8 for guiding the fuel gas flowing through the above-described fuel gas supply line 7 to the prechamber 30 as at least some of the unburned fuel, the fuel gas introduction line 8 branching from the fuel gas supply line 7.

In the illustrated embodiment, the downstream end of the fuel gas introduction line 8 is connected to the mixture gas introduction line 6. However, a fuel gas introduction inlet communicating with the prechamber 30 may be formed at the downstream end of the fuel gas introduction line 8. The fuel gas introduction inlet may be formed in an end surface of the end portion 125 of the prechamber plug holder 12B on the main combustion chamber 20 side.

In a case where the prechamber gas engine 1 is operated under a low load or no load that is equal to or less than a predetermined ratio (for example, 30%) with respect to the rated output, the supply pressure of the mixture gas guided to the prechamber 30 through the mixture gas introduction line 6 is lowered, and there is a concern that the combustion of the prechamber gas engine 1 may become unstable. During low-load operation or no-load operation of the prechamber gas engine 1, the supply pressure of the fuel gas required to transmit the fuel gas to the prechamber 30 is low. Therefore, the fuel gas can be introduced into the prechamber 30 through the fuel gas introduction line 8 without providing a compressor for boosting the fuel gas in the fuel gas supply line 7 or the fuel gas introduction line 8. The fuel gas introduced into the prechamber 30 through the fuel gas introduction line 8 is mixed with the gas in the prechamber 30, whereby the excessively-rich mixture gas can be formed in the prechamber 30.

According to the above-described configuration, in a case where the prechamber gas engine 1 is operated under a low load or no load that is equal to or less than a predetermined ratio (for example, 30%) with respect to the rated output, the supply pressure of the mixture gas guided to the prechamber 30 through the mixture gas introduction line 6 is lowered, and there is a concern that the combustion of the prechamber gas engine 1 may become unstable. During low-load operation or no-load operation of the prechamber gas engine 1, the fuel gas is guided to the prechamber 30 through the fuel gas introduction line 8, so that it is possible to prevent the combustion of the prechamber gas engine 1 from becoming unstable.

### (First Backflow Prevention Device and Second Backflow Prevention Device)

As shown in Fig. 6, the prechamber gas engine 1 according to some embodiments further includes a first backflow prevention device (check valve in the illustrated example) 91 and a second backflow prevention device (check valve in the illustrated example) 92. The fuel gas introduction line 8 is connected to the mixture gas introduction line 6. The first backflow prevention device 91 is provided between the connecting portion P2 with the intake line 4 and the connecting portion P3 with the fuel gas introduction line 8 in the mixture gas introduction line 6, and is configured to prevent the circulation of the gas from the connecting portion P3 with the fuel gas introduction line 8 toward the connecting portion P2 with the intake line 4. The second backflow prevention device 92 is provided in the fuel gas introduction line 8 and is configured to prevent the circulation of the gas from the connecting portion P4 with the mixture gas introduction line 6 toward the connecting portion P5 with the fuel gas supply line 7.

As shown in Fig. 6, the above-described backflow prevention device 90 may be installed between the connecting portion P3 in the mixture gas introduction line 6 with the fuel gas introduction line 8 and the mixture gas introduction inlet 61.

During low-load operation or no-load operation of the prechamber gas engine 1, the pressure of the fuel gas flowing through the fuel gas supply line 7 is higher than the pressure of the mixture gas flowing on the downstream side of the compressor 41 in the intake line 4. In this case, the fuel gas can be supplied to the prechamber 30 via the fuel gas introduction line 8 and the downstream side from the connecting portion P3 in the mixture gas introduction line 6 with the fuel gas introduction line 8.

During high-load operation of the prechamber gas engine 1, the pressure of the mixture gas flowing on the downstream side of the compressor 41 in the intake line 4 is higher than the pressure of the fuel gas flowing through the fuel gas supply line 7. In this case, the mixture gas can be supplied to the prechamber 30 through the mixture gas introduction line 6.

According to the above-described configuration, the prechamber gas engine 1 includes the first backflow prevention device 91, so that it is possible to prevent the fuel gas from being introduced into the intake line 4 through the mixture gas introduction line 6. In addition, the prechamber gas engine 1 is provided with the second backflow prevention device 92, so that it is possible to prevent the mixture gas from being introduced into the fuel gas supply line 7 through the fuel gas introduction line 8. According to the above-described configuration, the fuel gas can be supplied to the prechamber 30 during low-load operation or no-load operation of the prechamber gas engine 1, and the mixture gas can be supplied to the prechamber 30 through the mixture gas introduction line 6 during high-load operation of the prechamber gas engine 1.

In the present specification, an expression of relative or absolute disposition such as "in a direction", "along a direction", "parallel", "orthogonal", "center", "concentric" and "coaxial" shall not be construed as indicating only the disposition in a strict literal sense, but also includes a state where the disposition is relatively displaced by a tolerance, or by an angle or a distance whereby it is possible to achieve the same function.

For example, expressions representing that matters are in an equal state such as "same", "equal", and "homogeneous" not only represent a strictly equal state, but also represent a state where a tolerance or a difference exists to the extent that the same function can be obtained.

Further, in the present specification, an expression of a shape such as a rectangular shape or a cylindrical shape shall not be construed as only the geometrically strict shape, but also includes a shape with unevenness or chamfered corners within the range in which the same effect can be achieved.

Furthermore, expressions such as "comprise", "include" and "have" are not intended to be exclusive of other components.

The present disclosure is not limited to the above-described embodiments, and also includes a form in which modifications are added to the above-described embodiments or a form in which the embodiments are combined with each other as appropriate.

The contents described in the above embodiments are understood as follows, for example.

1) A prechamber gas engine (1) according to at least one embodiment of the present disclosure includes a main combustion chamber (20) and a prechamber (30) communicating with the main combustion chamber (20) through a plurality of ejection holes (31), and the engine includes:
   a main combustion chamber forming portion (2) that forms the main combustion chamber (20);
   a prechamber forming portion (3) that forms the prechamber (30);
   an intake line (4) for guiding a mixture gas containing a fuel gas and air to the main combustion chamber (20);
   a spark plug (5) that is disposed in the prechamber (30) and is configured to ignite an unburned fuel; and
   a mixture gas introduction line (6) for guiding the mixture gas flowing through the intake line (4) to the prechamber (30) as at least some of the unburned fuel, the mixture gas introduction line (6) branching from the intake line (4).
   According to the configuration of the above 1), the prechamber gas engine (1) can guide the mixture gas flowing through the intake line (4) to the prechamber (30) through the mixture gas introduction line (6), and can increase the combustible concentration of the mixture gas in the vicinity of the spark plug (5) in the prechamber (30). The prechamber gas engine (1) does not require a dedicated compressor for boosting the fuel gas, which is transmitted to the prechamber (30), to a pressure level similar to the boost pressure, compared to the active prechamber. Therefore, it is possible to suppress the complication of the structure. In the prechamber gas engine (1), the influence of the residual exhaust gas in the previous cycle is smaller than that in the passive prechamber. Therefore, the degree of freedom in designing the shape of the plurality of ejection holes or the shape of the prechamber is increased.
2) In some embodiments, in the prechamber gas engine (1) according to the above 1),
   each of the plurality of ejection holes (31) is formed at an end portion (32) on a main combustion chamber (20) side in an extending direction of a central axis (fuel gas supply line 7) of the prechamber (30),
   the spark plug (5) is mounted on an end portion (33) on a side separated from the main combustion chamber (20) in the extending direction of the central axis (CS) of the prechamber (30), and
   a mixture gas introduction inlet (61) communicating with the prechamber (30) formed in the mixture gas introduction line (6) is formed at the end portion (33) on the side separated from the main combustion chamber (20) of the prechamber (30).
   According to the configuration of the above 2), the spark plug (5) and the mixture gas introduction inlet (61) are located on the same side (side separated from the main combustion chamber 20) in the extending direction of the central axis (CS) of the prechamber (30). Therefore, the combustible concentration of the mixture gas in the vicinity of the spark plug (5) can be rapidly increased by the mixture gas introduced into the prechamber (30) from the mixture gas introduction inlet (61). In addition, the temperature of the spark plug can be reduced by the mixture gas introduced into the prechamber (30) from the mixture gas introduction inlet (61) during the gas supply step. Therefore, damage to the spark plug (5) due to heat can be suppressed.
3) In some embodiments, in the prechamber gas engine (1) according to the above 2), the prechamber (30) includes
   a first region (30A) in which an ignition unit (51) of the spark plug (5) is disposed and the mixture gas introduction inlet (61) is formed,
   a second region (30B) in which the plurality of ejection holes (31) are formed, and
   a third region (30C) that is formed between the first region (30A) and the second region (30B) and of which an area orthogonal to the central axis (CS) of the prechamber (30) is smaller than an area of the first region (30A).
   According to the configuration of the above 3), in the prechamber (30), the area of the third region (30C) orthogonal to the central axis (CS) of the prechamber (30) is smaller than that of the first region (30A). Therefore, the mixture gas guided from the mixture gas introduction inlet (61) to the first region (30A) can be retained in the first region (30A) where the ignition unit (51) of the spark plug (5) is present. In this manner, the combustible concentration of the mixture gas in the vicinity of the spark plug (5) can be effectively increased, and the cooling effect of the spark plug (5) by the mixture gas introduced into the prechamber (30) from the mixture gas introduction inlet (61) can be increased.
4) In some embodiments, in the prechamber gas engine (1) according to the above 3),
   in a cross section along the central axis (CS) of the prechamber (30), an axis (CP) of the spark plug (5) extends in the extending direction of the central axis (CS) of the prechamber (30).
   According to the configuration of the above 4), the axis (CP) of the spark plug (5) extends in the extending direction of the central axis (CS) of the prechamber (30). In this case, the installation of the spark plug (5) is easier than in a case where the axis (CP) of the spark plug (5) is inclined with respect to the extending direction of the central axis (CS) of the prechamber (30).
5) In some embodiments, in the prechamber gas engine (1) according to the above 3),
   in a cross section along the central axis (CS) of the prechamber (30), the spark plug (5) is inclined such that a distance from the central axis (CS) of the prechamber (30) decreases as an axis (CP) of the spark plug (5) is directed toward the main combustion chamber (20) side.
   According to the configuration of the above 5), the axis (CP) of the spark plug (5) is inclined with respect to the extending direction of the central axis (CS) of the prechamber (30). In this case, it is easier to allow the mixture gas introduced into the prechamber (30) from the mixture gas introduction inlet (61) to flow toward the ignition unit (51) of the spark plug (5), compared to a case where the axis (CP) of the spark plug (5) extends in the extending direction of the central axis (CS) of the prechamber (30).
6) In some embodiments, in the prechamber gas engine (1) according to any one of the above 2) to 5),
   in a cross section along the central axis (CS) of the prechamber (30), at least a part of the mixture gas introduction line (6), which includes the mixture gas introduction inlet (61), is inclined such that a distance from an axis (CP) of the spark plug (5) decreases as at least a part of the mixture gas introduction line (6), which includes the mixture gas introduction inlet (61), is directed toward a mixture gas introduction inlet (61) side.
   According to the configuration of the above 6), at least a part including the mixture gas introduction inlet (61) of the mixture gas introduction line (6) is inclined toward the axis (CP) of the spark plug (5), so that the mixture gas introduced into the prechamber (30) from the mixture gas introduction inlet (61) can be guided to the vicinity of the spark plug (5). In this manner, the combustible concentration of the mixture gas in the vicinity of the spark plug (5) can be effectively increased, and the cooling effect of the spark plug (5) by the mixture gas introduced into the prechamber (30) from the mixture gas introduction inlet (61) can be increased.
7) In some embodiments, in the prechamber gas engine (1) according to any one of the above 2) to 6),
   when viewed from one side in the extending direction of the central axis (CS) of the prechamber (30),
   at least a part including the mixture gas introduction inlet (61) of the mixture gas introduction line (6) extends toward an ignition unit (51) of the spark plug (5).
   According to the configuration of the above 7), when viewed from one side in the extending direction of the central axis (CS) of the prechamber (30), at least a part including the mixture gas introduction inlet (61) of the mixture gas introduction line (6) extends toward the ignition unit (51) of the spark plug (5). In this manner, the mixture gas introduced into the prechamber (30) from the mixture gas introduction inlet (61) can be guided to the vicinity of the ignition unit (51). In this manner, the combustible concentration of the mixture gas in the vicinity of the ignition unit (51) can be effectively increased, and the cooling effect of the ignition unit (51) by the mixture gas introduced into the prechamber (30) from the mixture gas introduction inlet (61) can be increased.
8) In some embodiments, in the prechamber gas engine (1) according to any one of the above 2) to 7),
   in a cross section along the central axis (CS) of the prechamber (30), an ignition unit (51) of the spark plug (5) is located on a virtual straight line (EL) passing through a center of the mixture gas introduction inlet (61).
   According to the configuration of the above 8), the mixture gas introduced into the prechamber (30) from the mixture gas introduction inlet (61) can be guided to the ignition unit (51) of the spark plug (5). In this manner, the combustible concentration of the mixture gas in the vicinity of the ignition unit (51) can be effectively increased, and the cooling effect of the ignition unit (51) by the mixture gas introduced into the prechamber (30) from the mixture gas introduction inlet (61) can be increased.
9) In some embodiments, the prechamber gas engine (1) according to any one of the above 1) to 8) further includes a compressor (41) that is provided in the intake line (4) and is configured to compress the mixture gas, in which
   a connecting portion (P1) in the intake line (4) with the mixture gas introduction line (6) is provided on a downstream side of the compressor (41).
   According to the configuration of the above 9), the mixture gas boosted by the compressor (41) can be guided to the prechamber (30) through the mixture gas introduction line (6). In this case, even without a dedicated compressor, the supply pressure of the mixture gas guided to the prechamber (30) through the mixture gas introduction line (6) can be increased. Therefore, the mixture gas can be effectively supplied to the prechamber (30).
10) In some embodiments, the prechamber gas engine (1) according to the above 9) further includes:
   a fuel gas supply line (7) for supplying the fuel gas, the fuel gas supply line (7) connected to an upstream side of the compressor (41) of the intake line (4); and
   a fuel gas introduction line (8) for guiding the fuel gas flowing through the fuel gas supply line (7) to the prechamber (30) as at least some of the unburned fuel, the fuel gas introduction line (8) branching from the fuel gas supply line (7).
   According to the configuration of the above 10), in a case where the prechamber gas engine (1) is operated under a low load or no load that is equal to or less than a predetermined ratio with respect to the rated output, the supply pressure of the mixture gas guided to the prechamber (30) through the mixture gas introduction line (6) is lowered, and there is a concern that the combustion of the prechamber gas engine (1) may become unstable. During low-load operation or no-load operation of the prechamber gas engine (1), the fuel gas is guided to the prechamber (30) through the fuel gas introduction line (8), so that it is possible to prevent the combustion of the prechamber gas engine (1) from becoming unstable.
11) In some embodiments, in the prechamber gas engine (1) according to the above 10),
   the fuel gas introduction line (8) is connected to the mixture gas introduction line (6),
   the prechamber gas engine (1) further includes
   a first backflow prevention device (91) that is provided between a connecting portion (P2) with the intake line (4) and a connecting portion (P3) with the fuel gas introduction line (8) in the mixture gas introduction line (6) and prevents circulation of a gas from the connecting portion (P3) with the fuel gas introduction line (8) toward the connecting portion (P2) with the intake line (4), and
   a second backflow prevention device (92) that is provided in the fuel gas introduction line (8) and prevents circulation of a gas from a connecting portion (P4) with the mixture gas introduction line (6) toward a connecting portion (P5) with the fuel gas supply line (7).

According to the configuration of the above 11), the prechamber gas engine (1) includes the first backflow prevention device (91), so that it is possible to prevent the fuel gas from being introduced into the intake line (4) through the mixture gas introduction line (6). In addition, the prechamber gas engine (1) is provided with the second backflow prevention device (92), so that it is possible to prevent the mixture gas from being introduced into the fuel gas supply line (7) through the fuel gas introduction line (8). According to the configuration of the above 11), the fuel gas can be supplied to the prechamber (30) during low-load operation or no-load operation of the prechamber gas engine (1), and the mixture gas can be supplied to the prechamber (30) through the mixture gas introduction line (6) during high-load operation of the prechamber gas engine (1).

### Reference Signs List

1: prechamber gas engine
2: main combustion chamber forming portion
3: prechamber forming portion
4: intake line
5: spark plug
6: mixture gas introduction line
7: fuel gas supply line
8: fuel gas introduction line
9: exhaust line
11: cylinder block
12: cylinder head member
12A: cylinder head
12B: prechamber plug holder
13: cylinder
14: piston
15: intake hole
16: exhaust hole
17: intake valve
18: exhaust valve
19: prechamber nozzle
20: main combustion chamber
30: prechamber
31: ejection hole
41: compressor
42: rotary shaft
43: turbine
51: ignition unit
61: mixture gas introduction inlet
90: backflow prevention device
91: first backflow prevention device
92: second backflow prevention device
111: cylinder bore
121: closing portion
122: bore side surface
123: spark plug support portion
124: plug holder support portion
125: end portion
126: through-hole
CP: axis of spark plug
CS: central axis of prechamber
EL: virtual straight line

## Claims

1. A prechamber gas engine including a main combustion chamber and a prechamber communicating with the main combustion chamber through a plurality of ejection holes, the engine comprising:
a main combustion chamber forming portion that forms the main combustion chamber;
a prechamber forming portion that forms the prechamber;
an intake line for guiding a mixture gas containing a fuel gas and air to the main combustion chamber;
a spark plug that is disposed in the prechamber and is configured to ignite an unburned fuel; and
a mixture gas introduction line for guiding the mixture gas flowing through the intake line to the prechamber as at least some of the unburned fuel, the mixture gas introduction line branching from the intake line.

2. The prechamber gas engine according to Claim 1, wherein
each of the plurality of ejection holes is formed at an end portion of the prechamber on a main combustion chamber side in an extending direction of a central axis of the prechamber,
the spark plug is mounted on an end portion on a side separated from the main combustion chamber in the extending direction of the central axis of the prechamber, and
a mixture gas introduction inlet communicating with the prechamber formed in the mixture gas introduction line is formed at the end portion on the side separated from the main combustion chamber of the prechamber.

3. The prechamber gas engine according to Claim 2, wherein the prechamber includes
a first region in which an ignition unit of the spark plug is disposed and the mixture gas introduction inlet is formed,
a second region in which the plurality of ejection holes are formed, and
a third region that is formed between the first region and the second region and of which an area orthogonal to the central axis of the prechamber is smaller than an area of the first region.

4. The prechamber gas engine according to Claim 3, wherein
in a cross section along the central axis of the prechamber, an axis of the spark plug extends in the extending direction of the central axis of the prechamber.

5. The prechamber gas engine according to Claim 3, wherein
in a cross section along the central axis of the prechamber, the spark plug is inclined such that a distance from the central axis of the prechamber decreases as an axis of the spark plug is directed toward the main combustion chamber side.

6. The prechamber gas engine according to any one of Claims 2 to 5, wherein
in a cross section along the central axis of the prechamber, at least a part of the mixture gas introduction line, which includes the mixture gas introduction inlet, is inclined such that a distance from an axis of the spark plug decreases as at least a part of the mixture gas introduction line, which includes the mixture gas introduction inlet, is directed toward a mixture gas introduction inlet side.

7. The prechamber gas engine according to any one of Claims 2 to 5, wherein
when viewed from one side in the extending direction of the central axis of the prechamber,
at least a part including the mixture gas introduction inlet of the mixture gas introduction line extends toward an ignition unit of the spark plug.

8. The prechamber gas engine according to any one of Claims 2 to 5, wherein
in a cross section along the central axis of the prechamber, an ignition unit of the spark plug is located on a virtual straight line passing through a center of the mixture gas introduction inlet.

9. The prechamber gas engine according to any one of Claims 1 to 5, further comprising a compressor that is provided in the intake line and is configured to compress the mixture gas, wherein
a connecting portion in the intake line with the mixture gas introduction line is provided on a downstream side of the compressor.

10. The prechamber gas engine according to Claim 9, further comprising:
a fuel gas supply line for supplying the fuel gas, the fuel gas supply line connected to an upstream side of the compressor of the intake line; and
a fuel gas introduction line for guiding the fuel gas flowing through the fuel gas supply line to the prechamber as at least some of the unburned fuel, the fuel gas introduction line branching from the fuel gas supply line.

11. The prechamber gas engine according to Claim 10, wherein
the fuel gas introduction line is connected to the mixture gas introduction line,
the prechamber gas engine further comprises
a first backflow prevention device that is provided between a connecting portion with the intake line and a connecting portion with the fuel gas introduction line in the mixture gas introduction line and prevents circulation of a gas from the connecting portion with the fuel gas introduction line toward the connecting portion with the intake line, and
a second backflow prevention device that is provided in the fuel gas introduction line and prevents circulation of a gas from a connecting portion with the mixture gas introduction line toward a connecting portion with the fuel gas supply line.
